# FASCICULE DE BREVET EUROPEEN

(11) **EP 2 125 498 B1**
(45) Date de publication et mention de la délivrance du brevet: **01.09.2010**
(21) Numéro de dépôt: 08775653.2
(22) Date de dépôt: 26.02.2008
(51) Int. Cl.: B62D 65/16, B62D 65/02, B60R 19/24

(54) **ORGANE DE POSITIONNEMENT D'UNE PIECE DE CARROSSERIE SUR UN VEHICULE AUTOMOBILE**
VORRICHTUNG ZUR POSITIONIERUNG EINES KAROSSERIETEILS AUF EINEM KRAFTFAHRZEUG
DEVICE FOR POSITIONING A PIECE OF CAR BODY WORK ON A MOTOR VEHICLE

(30) Priorité: 28.02.2007 FR 0753558
(43) Date de publication de la demande: 02.12.2009
(73) Titulaire: Compagnie Plastic Omnium, 69007 Lyon (FR)
(72) Inventeur: STABLO, Frédéric, F-38390 Porcieu Amblagnieu (FR); NOZZA, Sébastien, F-70400 Bussurel (FR)
(74) Mandataire: Thiollier, Clémence-Olivia Laure Marie
(86) Numéro de dépôt international: PCT/FR2008/050322
(87) Numéro de publication internationale: WO 2008/125764

(56) Documents cités:
- DE-A1- 10 228 464
- DE-A1-102006 008 216
- FR-A- 2 857 314

## Description

### Domaine technique.

La présente invention concerne un organe de positionnement d'une pièce de carrosserie sur un véhicule automobile.

### Etat de la technique.

On connaît déjà sur un véhicule automobile un absorbeur de chocs arrière, exerçant une fonction de positionnement de la plage supérieure d'une peau de pare-chocs arrière, cette peau de pare-chocs étant juxtaposée, lorsqu'elle est montée sur le véhicule, à un ouvrant arrière, composé d'un hayon, pouvant prendre une position ouverte et une position fermée sur le véhicule.

Au cours du montage du véhicule, on positionne la peau de pare-chocs et le hayon de la façon suivante. Tout d'abord, on monte le hayon sur le véhicule, on le ferme, on rapporte une cale en élastomère le long du bord inférieur du hayon, puis l'on rapporte l'absorbeur au-dessous de cette cale, en le plaquant contre la cale en élastomère. Ainsi, la cale en élastomère a pour fonction de créer un certain jeu entre l'absorbeur et le bord inférieur du hayon, ce qui permet ensuite de fixer définitivement l'absorbeur sur le véhicule. Une fois l'absorbeur fixé, on démonte la cale en élastomère, et l'on rapporte la peau de pare-chocs sur l'absorbeur. Grâce à l'utilisation de la cale, la peau de pare-chocs et le hayon présentent un jeu relativement régulier.

Un organe de positionnement selon le préambule de la revendication 1 est connu du FR-A-2 857 314, voir l'organe 5 dans les figures.

### Problème posé par l'état de la technique.

L'utilisation d'une cale assure un positionnement satisfaisant de la peau de pare-chocs arrière par rapport au hayon. Néanmoins, la mise en place, puis le retrait, de la cale pour assurer ce positionnement nécessite un temps de montage et un coût en main d'oeuvre relativement importants.

### Solution proposée.

L'invention vise à fournir un organe de positionnement d'une pièce de carrosserie assurant un positionnement plus rapide de la pièce de carrosserie par rapport à un ouvrant.

A cet effet, l'invention a pour objet un organe de positionnement d'une pièce de carrosserie de véhicule automobile, la pièce de carrosserie étant destinée à être juxtaposée à un ouvrant du véhicule, cet ouvrant pouvant prendre une position ouverte et une position fermée sur le véhicule, **caractérisé en ce que** l'organe de positionnement comporte des moyens élastiques aptes à définir :
- une première position de l'organe de positionnement lorsque l'ouvrant est en position ouverte, et
- une seconde position de l'organe de positionnement lorsque l'ouvrant est en position fermée, au cours de laquelle les moyens élastiques sont déformés.

### Avantage particulier.

Grâce aux moyens élastiques, on peut définir une première position de l'organe de positionnement, appelée position provisoire, lorsque l'ouvrant est en position ouverte sur le véhicule, au cours de laquelle l'organe de positionnement est maintenu sur le véhicule, sans présenter forcément un positionnement précis. Puis, lors de sa fermeture, l'ouvrant peut imposer un déplacement de l'organe vers une seconde position, appelée position définitive, ce déplacement étant permis par la déformation des moyens élastiques. Cette position définitive de l'organe correspond à une position satisfaisante de l'organe de positionnement par rapport à l'ouvrant, et l'on peut ensuite fixer définitivement cet organe, donc la pièce de carrosserie, sur le véhicule.

Ainsi, au cours du montage du véhicule, c'est la fermeture de l'ouvrant qui assure un positionnement automatique de l'organe de positionnement, et donc, par la suite, de la pièce de carrosserie.

On comprendra qu'il n'est pas nécessaire d'utiliser une pièce intermédiaire telle qu'une cale pour positionner l'organe et l'ouvrant, ce qui diminue le nombre d'opérations de montage du véhicule.

En outre, le positionnement de l'organe et de l'ouvrant est direct, c'est-à-dire que le bord de l'organe et celui de l'ouvrant agissent directement l'un sur l'autre, si bien que l'on peut assurer un jeu particulièrement petit entre la pièce de carrosserie et l'ouvrant. Cette diminution de jeu apportée est particulièrement intéressante : alors que l'on réalise généralement des jeux voisins de 4 mm (millimètres) entre une pièce de carrosserie et un ouvrant, le positionnement automatique assuré par l'ouvrant décrit ci-dessus permet d'obtenir des jeux voisins de 1 mm.

Par ailleurs, le jeu réalisé entre le support et l'ouvrant, puis entre la pièce de carrosserie et l'ouvrant est répétable, c'est-à-dire identique d'un véhicule à l'autre, et régulier, c'est-à-dire identique sur toute la dimension de l'ouvrant. A la différence, l'utilisation d'une cale peut poser des difficultés de répétabilité et de régularité des jeux. En effet, d'une part, la cale constitue une pièce supplémentaire, qui présente des tolérances de fabrication. D'autre part, le jeu formé par la cale peut varier sur la longueur de la jonction de l'organe de positionnement et de l'ouvrant, notamment en fonction de la pression que l'opérateur exercera sur la cale en plaquant l'organe contre l'ouvrant, d'autant plus que cette cale est généralement en élastomère. De plus, en utilisant une cale, la pression exercée peut varier d'un opérateur à l'autre, si bien que le jeu varie d'un véhicule à l'autre, voire d'un côté du véhicule à l'autre.

### Modes de réalisation particuliers.

L'invention peut en outre comporter l'une ou plusieurs des caractéristiques suivantes :
- Les moyens élastiques comprennent une lame ressort apte à se déformer dans une direction, appelée direction de déformation, perpendiculaire à la jonction entre la pièce de carrosserie et l'ouvrant.
- L'organe de positionnement comporte une butée de positionnement de l'organe dans une direction perpendiculaire à la direction de déformation.
- La direction de déformation correspond à la direction verticale du véhicule, et l'organe comporte de préférence des butées de positionnement de l'organe dans la direction longitudinale ou transversale du véhicule.
- L'organe de positionnement comporte des moyens de fixation définitive de l'organe sur le véhicule, l'organe étant dans sa seconde position.
- L'organe de positionnement comporte, sur une paroi destinée à être juxtaposée à l'ouvrant, des moyens d'espacement de la paroi de l'organe et de l'ouvrant. Ces moyens sont destinés à assurer un jeu minimum entre l'organe et l'ouvrant, de façon notamment à laisser de la place pour insérer la paroi de la pièce de carrosserie.
- Les moyens d'espacement sont escamotables, notamment au moyen d'un film charnière (amincissement local de la matière), pliable ou déchirable.
- L'organe de positionnement est destiné à positionner une peau de pare-chocs arrière, juxtaposée avec un hayon arrière.
- L'organe de positionnement est destiné à positionner une pièce de carrosserie avant, juxtaposée à un capot avant du véhicule. Ce mode de réalisation est particulièrement intéressant puisque l'on garantit un positionnement correct du capot et d'une pièce de carrosserie, si bien que l'on peut prévoir des butées de claquage du capot sur le capot ou la pièce de carrosserie sans nécessiter d'opérations de positionnement de ces butées.
- L'organe de positionnement est un absorbeur de chocs. Ainsi, on peut utiliser un absorbeur de chocs arrière pour assurer une fonction de support et de positionnement de la peau de pare-chocs.
- L'organe de positionnement est une grille de calandre.
- L'organe de positionnement est destiné à positionner une pièce de carrosserie latérale, juxtaposée avec une portière latérale du véhicule.

L'invention a également pour objet un ensemble d'un organe de positionnement tel que décrit ci-dessus et de la pièce de carrosserie. Eventuellement, l'organe de positionnement est venu de matière avec la pièce de carrosserie.

L'invention a en outre pour objet un procédé de positionnement d'une pièce de carrosserie par rapport à un ouvrant de véhicule automobile, l'ouvrant pouvant prendre une position ouverte et une position fermée, au cours duquel :
- on monte l'ouvrant sur le véhicule en position ouverte ;
- on rapporte un organe de positionnement de la pièce de carrosserie sur le véhicule, dans une première position ;
- on ferme l'ouvrant sur le véhicule, ce qui génère un déplacement élastique de l'organe afin qu'il prenne une seconde position ;
- on fixe définitivement l'organe de positionnement dans cette seconde position sur le véhicule,
- on rapporte la pièce de carrosserie sur l'organe de positionnement.

### Description des figures

L'invention sera mieux comprise à la lecture de la description qui va suivre, donnée uniquement à titre d'exemple et faite en se référant aux dessins dans lesquels :
- la figure 1 est une vue schématique en perspective de l'avant d'une partie d'un organe de positionnement selon l'invention ;
- la figure 2 est une coupe transversale dans la direction II d'un organe de positionnement similaire à celui de la figure 1, rapporté sur le véhicule ;
- la figure 3 est une coupe transversale dans la direction III d'un organe de positionnement similaire à celui de la figure 1, rapporté sur le véhicule ;
- la figure 4 est une coupe similaire à celle de la figure 3, la pièce de carrosserie ayant été rapportée sur l'organe de positionnement.

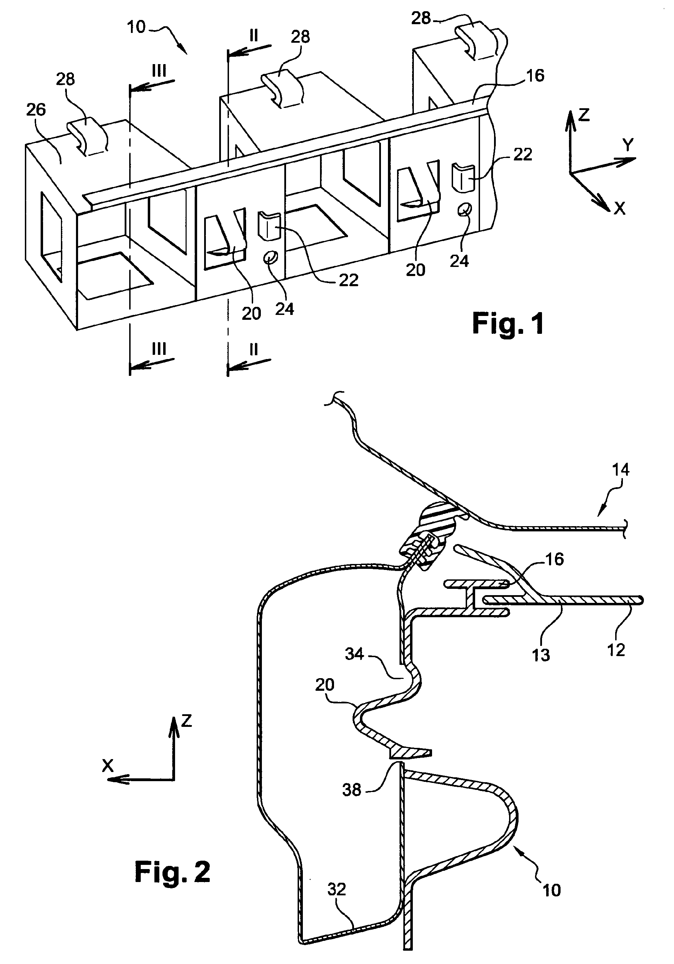

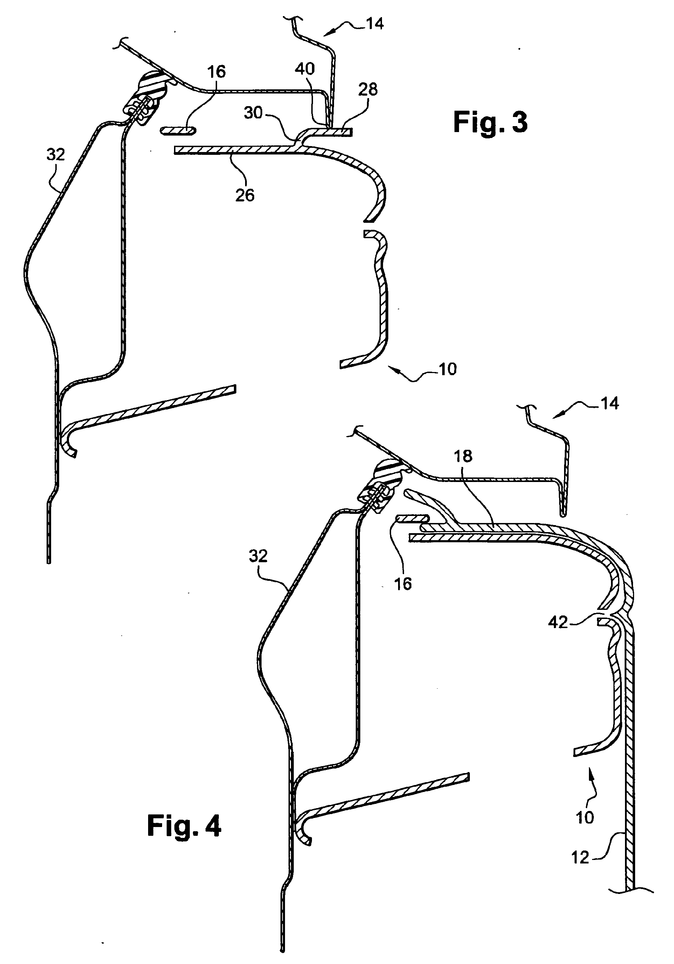

On a représenté sur la figure 1 un absorbeur arrière 10, constituant un organe de positionnement d'une peau 12 de pare-chocs arrière (visible sur la figure 4), cette peau 12 étant destinée à être juxtaposée à un hayon arrière 14, pouvant prendre une position ouverte et une position fermée sur le véhicule.

L'absorbeur 10 comporte des moyens 16 de positionnement de la plage supérieure 18 de la peau 12, comprenant une rainure s'étendant dans la direction transversale Y du véhicule.

L'absorbeur 10 comporte des moyens élastiques 20, composés de lames ressorts pouvant se déformer dans une direction de déformation, en l'occurrence la direction verticale Z, perpendiculaire à la jonction entre la pièce de carrosserie 12 et le hayon 14, c'est-à-dire perpendiculaire à la direction transversale Y du véhicule.

L'absorbeur 10 comporte également des butées de positionnement 22 de l'absorbeur 10 dans deux directions perpendiculaires à la direction de déformation Z, à savoir la direction transversale Y et la direction longitudinale X du véhicule. Ces butées se présentent sous la forme de crochets, visibles sur la figure 1.

L'absorbeur 10 comporte par ailleurs des moyens 24 de fixation définitive sur le véhicule, tels que des orifices de passage d'une vis.

En outre, l'absorbeur 10 comporte, sur sa paroi supérieure 26 destinée à être juxtaposée au hayon 14, des moyens d'espacement 28, destinés à assurer un espace minimum entre la paroi supérieure 26 de l'absorbeur et le hayon 14, visibles sur la figure 3, agencés de façon à être escamotables, grâce à un film charnière 30, les moyens étant escamotés sur la figure 4.

Le procédé de positionnement de la peau de pare-chocs 12 par rapport au hayon 14 va à présent être décrit.

On monte tout d'abord le hayon 14 sur la caisse du véhicule, en position ouverte. On rapporte ensuite l'absorbeur 10 sur la structure du véhicule, par exemple sur un panneau de structure arrière 32, visible sur la figure 2. La pièce 32 pourrait également être une traverse arrière, une poutre de chocs ou toute autre pièce de structure du véhicule.

Ce panneau arrière 32 comporte des orifices 34 de réception de chacune des lames ressorts 20. Le panneau 32 comporte par ailleurs des orifices non représentés dans lesquels sont insérés les crochets 22. Ainsi, lorsqu'on rapporte l'absorbeur 10 sur le panneau 32, les lames ressorts 20 sont peu contraintes, c'est-à-dire peu déformées, et reposent sur la paroi supérieure 38 de l'orifice 34, de façon à définir une première position de l'absorbeur 10, cette position étant provisoire. L'absorbeur 10 est donc maintenu dans la direction Z grâce à l'appui de la lame ressort 20 contre la paroi 38, dans la direction X au moyen des crochets 22 qui prennent en sandwich la paroi du panneau 32, et dans la direction Y au moyen de la paroi des crochets 22 qui s'étend dans la direction X.

On notera que le positionnement de l'absorbeur 10 dans la direction Y pourrait également être assuré par un pion de centrage ménagé sur la paroi avant de l'absorbeur 10 et coopérant avec un orifice oblong, s'étendant dans la direction de déformation Z, ménagé dans le panneau 32.

Comme on peut le constater, lorsque le hayon 14 est en position ouverte, et que l'absorbeur 10 se trouve dans une position provisoire, sa paroi supérieure 26 a une hauteur supérieure à celle représentée sur les figures 2 à 4, du fait que la lame ressort 20 est détendue.

Afin de définir la seconde position, à savoir la position définitive, de l'absorbeur 10, on ferme le hayon 14. Lors de cette fermeture, l'extrémité inférieure extérieure 40 du hayon coopère avec les butées d'espacement 28, ce qui provoque la déformation des lames ressorts 20 dans la direction de déformation Z. Les lames 20 se plient, ce qui permet ainsi à l'absorbeur 10 de se déplacer vers le bas afin qu'il prenne sa position définitive que l'on peut voir sur la figure 3.

Une fois dans cette position définitive, on fixe définitivement l'absorbeur 10 sur le véhicule au moyen des orifices 24, par exemple avec des vis.

Ensuite, afin de rapporter la peau de pare-chocs 12 sur le véhicule, on ouvre à nouveau le hayon 14 et on escamote les butées 28, par exemple en les détachant de l'absorbeur 10. Enfin, on peut rapporter la peau de pare-chocs 12 et insérer sa plage supérieure 18 dans la rainure 16, de façon à la positionner convenablement sur l'absorbeur 10; et donc par rapport au hayon 14. On notera que la peau 12 comporte d'autres moyens de positionnement, notamment une rainure transversale 42, et des moyens de fixation définitive.

Comme on peut le constater sur la figure 4, le jeu créé entre la peau de pare-chocs 12 et le hayon 14 est particulièrement petit.

On constate que le positionnement de l'absorbeur 10 par rapport au hayon se fait automatiquement, lors de la fermeture du hayon 14, ce qui permet un positionnement correct de la peau de pare-chocs.

On notera par ailleurs que la peau 12 et le hayon 14 sont convenablement mis en référence l'un par rapport à l'autre, indépendamment de la position de la pièce de structure 32 sur le véhicule. En effet, la position définitive est obtenue par l'écrasement des lames ressorts 20, qui s'écrasent plus ou moins selon la hauteur du panneau 32. Ainsi, même si panneau 32 n'est pas positionné de façon précise sur le véhicule, on obtient un jeu minime, régulier et répétable sur tous les véhicules sur lesquels l'organe de positionnement 10 est monté.

On notera que l'invention n'est pas limitée aux modes de réalisation précédemment décrits.

En particulier, dans l'exemple décrit ci-dessus, l'organe de positionnement est un absorbeur 10, mais il peut être remplacé par un organe prévu spécifiquement pour le positionnement, ou bien par un autre organe fonctionnel apte à assurer le positionnement d'une pièce de carrosserie. Notamment, l'organe de positionnement peut être venu de matière avec la pièce de carrosserie.

Par ailleurs, cet organe de positionnement peut être ménagé dans diverses parties du véhicule afin d'assurer un positionnement d'une pièce de carrosserie juxtaposée à un ouvrant. Par exemple, l'organe de positionnement permet de positionner une pièce de carrosserie avant, juxtaposée à un capot avant. Notamment, cet organe de positionnement peut être constitué d'une grille de calandre, d'un rebord intérieur d'une peau de pare-chocs avant, ou encore d'un organe support de radiateur, tel qu'une face avant technique.

Selon un autre exemple, l'organe de positionnement peut assurer le positionnement d'une pièce de carrosserie latérale avec une portière.

## Revendications

1. Organe de positionnement (10) d'une pièce de carrosserie (12) de véhicule automobile, la pièce de carrosserie (12) étant destinée à être juxtaposée à un ouvrant (14) du véhicule, cet ouvrant pouvant prendre une position ouverte et une position fermée sur le véhicule, **caractérisé en ce que** l'organe de positionnement (10) comporte des moyens élastiques (20) aptes à définir :
- une première position de l'organe de positionnement (10) lorsque l'ouvrant (14) est en position ouverte, et
- une seconde position de l'organe de positionnement (10) lorsque l'ouvrant (14) est en position fermée, au cours de laquelle les moyens élastiques (20) sont déformés.

2. Organe selon la revendication 1, dans lequel les moyens élastiques comprennent une lame ressort (20) apte à se déformer dans une direction (Z) appelée direction de déformation, perpendiculaire à la jonction (Y) entre la pièce de carrosserie (12) et l'ouvrant (14).

3. Organe selon la revendication 1 ou 2, comportant une butée (22) de positionnement de l'organe (10) dans une direction (Y, X) perpendiculaire à la direction de déformation (Z).

4. Organe selon la revendication 2, dans lequel la direction de déformation (Z) correspond à la direction verticale du véhicule, et l'organe comporte de préférence des butées (22) de positionnement de l'organe dans la direction longitudinale (X) ou transversale (Y) du véhicule.

5. Organe selon l'une quelconque des revendications 1 à 4, comportant des moyens (24) de fixation définitive de l'organe (10) sur le véhicule (32), l'organe (10) étant dans sa seconde position.

6. Organe selon l'une quelconque des revendications 1 à 5, comportant, sur une paroi destinée à être juxtaposée à l'ouvrant (14), des moyens d'espacement (28) de la paroi de l'organe (10) et de l'ouvrant (14).

7. Organe selon la revendication 6, dans lequel les moyens d'espacement (28) sont escamotables, notamment au moyen d'un film charnière, pliable ou déchirable.

8. Organe selon l'une quelconque des revendications 1 à 7, destiné à positionner une pièce de carrosserie arrière, juxtaposée à un hayon du véhicule.

9. Organe selon l'une quelconque des revendications 1 à 7, destiné à positionner une pièce de carrosserie avant, juxtaposée à un capot avant du véhicule.

10. Organe selon l'une quelconque des revendications 1 à 9, dans lequel l'organe est un absorbeur de chocs (10).

11. Organe selon l'une quelconque des revendications 1 à 10, dans lequel l'organe est une grille de calandre.

12. Organe selon l'une quelconque des revendications 1 à 7, destiné à positionner une pièce de carrosserie latérale, juxtaposée avec une portière latérale du véhicule.

13. Ensemble d'un organe de positionnement selon l'une quelconque des revendications 1 à 12, et d'une pièce de carrosserie.

14. Ensemble selon la revendication 13, dans lequel l'organe de positionnement est venu de matière avec la pièce de carrosserie.

15. Procédé de positionnement d'une pièce de carrosserie (12) par rapport à un ouvrant (14) de véhicule automobile, l'ouvrant pouvant prendre une position ouverte et une position fermée, au cours duquel :
- on monte l'ouvrant (14) sur le véhicule en position ouverte ;
- on rapporte un organe de positionnement (10) de la pièce de carrosserie (12) sur le véhicule, dans une première position ;
- on ferme l'ouvrant (14) sur le véhicule, ce qui génère un déplacement élastique de l'organe (10) afin qu'il prenne une seconde position ;
- on fixe définitivement l'organe de positionnement (10) dans cette seconde position sur le véhicule (32)
- on rapporte la pièce de carrosserie sur l'organe de positionnement.

## Claims

1. Device (10) for positioning a motor vehicle bodywork part (12), the bodywork part (12) being intended to be juxtaposed with a door (14) of the vehicle, it being possible for this door to adopt a open position and a closed position on the vehicle, **characterised in that** the positioning device (10) comprises elastic means (20) capable of defining:
- a first position for the positioning device (10) when the door (14) is in opened position, and
- a second position for the positioning device (10) when the door (14) is in closed position, during which the elastic means (20) are deformed.

2. Device according to claim 1, wherein the elastic means comprise a spring blade (20) capable of deforming in a direction (Z), called deformation direction, perpendicular to the junction (Y) between the bodywork part (12) and the door (14).

3. Device according to claim 1 or 2, comprising a stop (22) to position the device (10) in a direction (Y, X) perpendicular to the deformation direction (Z).

4. Device according to claim 2, wherein the deformation direction (Z) corresponds to the vertical direction of the vehicle and the device preferably comprises stops (22) to position the device in the longitudinal (X) or transverse (Y) direction of the vehicle.

5. Device according to any of claims 1 to 4, comprising means (24) for permanently fastening the device (10) on the vehicle (32), the device (10) being in its second position.

6. Device according to any of claims 1 to 5, comprising on a wall intended to be juxtaposed with the door (14), means (28) for leaving a space between the wall of the device (10) and the door (14).

7. Device according to claim 6, wherein the spacing means (28) are retractable, in particular by using a foldable or tearable hinge film.

8. Device according to any of claims 1 to 7, intended to position a rear bodywork part, juxtaposed with a tailgate of the vehicle.

9. Device according to any of claims 1 to 7, intended to position a front bodywork part, juxtaposed with a front bonnet of the vehicle.

10. Device according to any of claims 1 to 9, wherein the device is an impact absorber (10).

11. Device according to any of claims 1 to 10, wherein the device is a radiator grille.

12. Device according to any of claims 1 to 7, intended to position a side bodywork part, juxtaposed with a side door of the vehicle.

13. Assembly of a positioning device according to any of claims 1 to 12 and a bodywork part.

14. Assembly according to claim 13, wherein the positioning device is made in one piece with the bodywork part.

15. Method for positioning a bodywork part (12) with respect to an door (14) of a motor vehicle, it being possible for this door to adopt an open position and a closed position, during which:
- the door (14) is mounted on the vehicle in open position;
- a device (10) for positioning the bodywork part (12) is fitted on the vehicle in a first position;
- the door (14) is closed on the vehicle, which results in an elastic displacement of the device (10) so that it adopts a second position;
- the positioning device (10) is fastened permanently in this second position on the vehicle (32);
- the bodywork part is fitted on the positioning device.

## Patentansprüche

1. Vorrichtung zum Positionieren (10) eines Karosserieteils (12) eines Kraftfahrzeugs, wobei das Karosserieteil (12) dazu bestimmt ist, neben einer Klappe(14) des Fahrzeugs zu liegen, wobei diese Klappe eine offene Position und eine geschlossene Position auf dem Fahrzeug einnehmen kann, **dadurch gekennzeichnet, dass** die Positionierungsvorrichtung (10) elastische Mittel (20) aufweist, die Folgendes definieren können:
- eine erste Position der Positionierungsvorrichtung (10), wenn die Klappe (14) in offener Position ist, und
- eine zweite Position der Positionierungsvorrichtung (10), wenn die Klappe (14) in geschlossener Position ist, während welcher die elastischen Mittel (20) verformt werden.

2. Vorrichtung nach Anspruch 1, bei der die elastischen Mittel ein Federblatt (20) aufweisen, das sich in eine Richtung (Z), Verformungsrichtung genannt, senkrecht zu der Verbindung (Y) zwischen dem Karosserieteil (12) und der Klappe (14) verformen kann.

3. Vorrichtung nach Anspruch 1 oder 2, die einen Anschlag (22) zum Positionieren der Vorrichtung (10) in eine Richtung (Y, X) senkrecht zu der Verformungsrichtung (Z) aufweist.

4. Vorrichtung nach Anspruch 2, bei der die Verformungsrichtung (Z) der vertikalen Richtung des Fahrzeugs entspricht, und die Vorrichtung vorzugsweise Anschläge (22) zum Positionieren der Vorrichtung in die Längsrichtung (X) oder in die Querrichtung (Y) des Fahrzeugs aufweist.

5. Vorrichtung nach einem der Ansprüche 1 bis 4, die Mittel (24) zum endgültigen Befestigen der Vorrichtung (10) auf dem Fahrzeug (32) aufweist, wobei die Vorrichtung (10) in ihrer zweiten Position ist.

6. Vorrichtung nach einem der Ansprüche 1 bis 5, die auf einer Wand, die dazu bestimmt ist, neben der Klappe (14) zu sein, Mittel (28) zum Beabstanden der Wand der Vorrichtung (10) und der Klappe (14) aufweist.

7. Vorrichtung nach Anspruch 6, bei der die Mittel (28) zum Beabstanden einziehbar sind, insbesondere mittels einer faltbaren oder zerreißbaren Scharnierfolie.

8. Vorrichtung nach einem der Ansprüche 1 bis 7, bestimmt zum Positionieren eines hinteren Karosserieteils, der neben einer Heckklappe des Fahrzeugs liegt.

9. Vorrichtung nach einem der Ansprüche 1 bis 7, bestimmt zum Positionieren eines vorderen Karosserieteils, der neben einer vorderen Motorhaube des Fahrzeugs liegt.

10. Vorrichtung nach einem der Ansprüche 1 bis 9, bei der die Vorrichtung ein Stoßfänger (10) ist.

11. Vorrichtung nach einem der Ansprüche 1 bis 10, bei der die Vorrichtung ein Kühlerschutzgitter ist.

12. Vorrichtung nach einem der Ansprüche 1 bis 7, bestimmt zum Positionieren eines seitlichen Karosserieteils, der neben einer SeitenKlappe des Fahrzeugs liegt.

13. Anordnung aus einer Positionierungsvorrichtung nach einem der Ansprüche 1 bis 12 und einem Karosserieteil.

14. Anordnung nach Anspruch 13, bei der die Positionierungsvorrichtung aus einem Teil mit dem Karosserieteil gefertigt ist.

15. Verfahren zum Positionieren eines Karosserieteils (12) in Bezug zu einer Klappe (14) eines Kraftfahrzeugs, wobei die Klappe eine offene und eine geschlossene Position einnehmen kann, bei dem :
- man die Klappe (14) auf das Fahrzeug in offener Position montiert;
- man eine Positionierungsvorrichtung (10) des Karosserieteils (12) an das Fahrzeug in einer ersten Position anbaut;
- man die Klappe (14) auf dem Fahrzeug schließt, was eine elastische Verlagerung der Positionierungsvorrichtung (10) erzeugt, so dass sie eine zweite Position einnimmt;
- man die Positionierungsvorrichtung (10) endgültig in dieser zweiten Position auf dem Fahrzeug (32) fixiert;
- man das Karosserieteil auf der Positionierungsvorrichtung anbaut.
